# DEMANDE DE BREVET EUROPEEN

(11) **EP 1 736 887 A2**
(43) Date de publication de la demande: **27.12.2006**
(21) Numéro de dépôt: 06290794.4
(22) Date de dépôt: 16.05.2006
(51) Int. Cl.: G06F 12/10

(54) **Repertoire de pages memoire**

(30) Priorité: 31.05.2005 FR 0505487
(71) Demandeur: STMICROELECTRONICS SA, 92120 Montrouge (FR)
(72) Inventeur: Nicolai, Jean, 13790 Chateauneuf-le-Rouge (FR)
(74) Mandataire: Verdure, Stéphane

(57) **Abrégé**

Un répertoire de pages mémoire (202) stocke des traductions d'adresse respectives qui associent chacune un VPN à un PPN, et qui sont utilisables dans un premier mode de fonctionnement d'un processeur incorporant le répertoire, pour accéder à des données stockées dans une mémoire physique. Chaque entrée du répertoire comprend un premier champ pour stocker le VPN, un deuxième champ pour stocker une portion d'adresse intermédiaire IPN, et un troisième champ pour stocker le PPN. Le premier champ et le troisième champ sont mutuellement associés via le deuxième champ. Le répertoire est adressable dans le premier mode de fonctionnement du processeur par le contenu des premiers champs. Il de plus agencé pour, en réponse à une requête d'accès à la mémoire externe, délivrer en sortie le PPN stocké dans le troisième champ d'une entrée déterminée, lorsqu'il est adressé par une valeur d'entrée correspondant au VPN stocké dans le premier champ de ladite entrée.

## Description

La présente invention se rapporte de manière générale aux techniques de gestion de l'espace mémoire externe, mises en oeuvre dans les processeurs (ou CPU, de l'anglais "Central Processing Unit").

Elle concerne plus particulièrement un répertoire de pages mémoire, aussi appelé mémoire tampon de traduction ou TLB (de l'anglais "Translation Look-aside Buffer"). Un tel répertoire existe dans les processeurs utilisant le concept de mémoire virtuelle à pages. C'est un élément matériel ("hardware") ayant la fonction d'une mémoire cache des dernières traductions d'adresse utilisées par le processeur pour accéder à des données stockées dans une mémoire externe, dans le cadre de l'exécution par le processeur d'un ou plusieurs programmes d'application.

A cet effet, une TLB comprend un nombre déterminé N de lignes ou entrées ("Entry", en anglais) pour stocker N traductions d'adresse respectives, associant chacune un numéro de page virtuelle (ou VPN, de l'anglais "Virtual Page Number") déterminé à un numéro de page physique (ou PPN, de l'anglais "Physical Page Number") déterminé. Les adresses virtuelles, seules connues par les programmes d'application, sont constituées du VPN et d'un offset correspondant à un déplacement dans la page virtuelle. Les adresses physiques, à savoir les adresses réelles des emplacements où sont stockés les mots de données dans la mémoire externe, sont constituées du PPN et d'un offset correspondant à un déplacement dans la page physique pour atteindre le mot de données adressé. La TLB est mise à jour dans un mode de fonctionnement privilégié, par exemple par un programme d'un système d'exploitation (ou OS, de l'anglais "Operating System"), ou un programme d'application en mode sécurisé.

Pour assurer la protection des données stockées dans la mémoire externe, une technique de traduction d'adresse à deux niveaux a été décrite dans le document EP 1 522 923. Cette technique est illustrée par le schéma de la figure 1. Une unité de gestion de la mémoire ("Memory Management Unit" ou MMU) comprend deux TLBs en cascade effectuant chacune une traduction d'adresse. Une première TLB, ou TLB supérieure 31, reçoit une adresse virtuelle VA en entrée, et délivre une adresse intermédiaire IA en sortie, laquelle correspond à la traduction de l'adresse VA stockée dans la TLB supérieure 31.

Fonctionnellement, la TLB supérieure 31 est utilisée comme une TLB conventionnelle dans les architectures classiques. Dit autrement, du point de vue du programme d'application, tout se passe comme s'il n'y avait qu'une seule TLB, et comme si l'adresse intermédiaire IA pointait directement sur une page de la mémoire physique. Néanmoins, ceci n'est pas le cas. La MMU comprend en effet une seconde TLB, ou TLB inférieure 32, qui effectue une seconde traduction d'adresse. Plus spécifiquement, la TLB inférieure 32 reçoit l'adresse intermédiaire IA en entrée et délivre une adresse physique PA en sortie, laquelle pointe réellement sur une page mémoire de la mémoire physique.

La TLB supérieure peut être configurée dans un mode de fonctionnement privilégié, par exemple par un programme de l'OS (mode superviseur). On peut configurer la TLB inférieure dans un mode de fonctionnement encore plus privilégié du processeur seulement, par exemple dans un mode privilégié de l'OS (mode superviseur sécurisé). Ainsi, les programmes s'exécutant sur le processeur en dehors de ce mode plus privilégié n'ont pas accès aux adresses physiques, ce qui garantit l'inviolabilité et l'intégrité des données stockées dans la mémoire externe.

D'autres exemples de traduction d'adresse à deux niveaux sont divulgués dans le document US 2004/0143720. Il y est décrit un processeur ayant deux modes de fonctionnement distincts, à savoir un mode sécurisé (ou S, pour "Secure" en anglais) et un mode non sécurisé (ou NS, pour "Non Secure" en anglais). Le premier niveau de traduction d'adresse (virtuel vers intermédiaire) est commandé par les modes S ou NS, alors que le second niveau de traduction d'adresse (intermédiaire vers physique) est commandé par le mode NS seulement. Une première implémentation est décrite, dans laquelle le processeur n'a qu'une seule MMU et exécute un code (logiciel) de fusion de tables de pages mémoires pour référencer deux TLBs, une pour chaque niveau de traduction. Dans une autre implémentation décrite, le processeur a une première et une seconde MMUs en cascade, ayant chacune une TLB, respectivement pour le premier et pour le second niveau de traduction.

La technique de traduction d'adresse à deux niveaux présente un grand intérêt. Néanmoins, elle pose un problème de performance et de consommation d'énergie.

En effet, un CPU ordinaire possède un seul niveau de traduction d'adresse, cest-à-dire une seule TLB. Le fonctionnement de cet élément matériel est relativement lent et consommateur d'énergie. En ajouter une deuxième en cascade a pour conséquence de doubler le temps nécessaire pour traduire l'adresse virtuelle en une adresse physique, et également de doubler la consommation d'énergie. Ces deux conséquences sont difficilement acceptables en pratique. En effet, La traduction d'adresse est sur le chemin critique lors de l'exécution d'un programme d'utilisateur par un CPU. De plus, la TLB est l'un des organes du CPU qui consomme le plus d'énergie (20% de l'énergie totale consommée dans le CPU, dans certains cas).

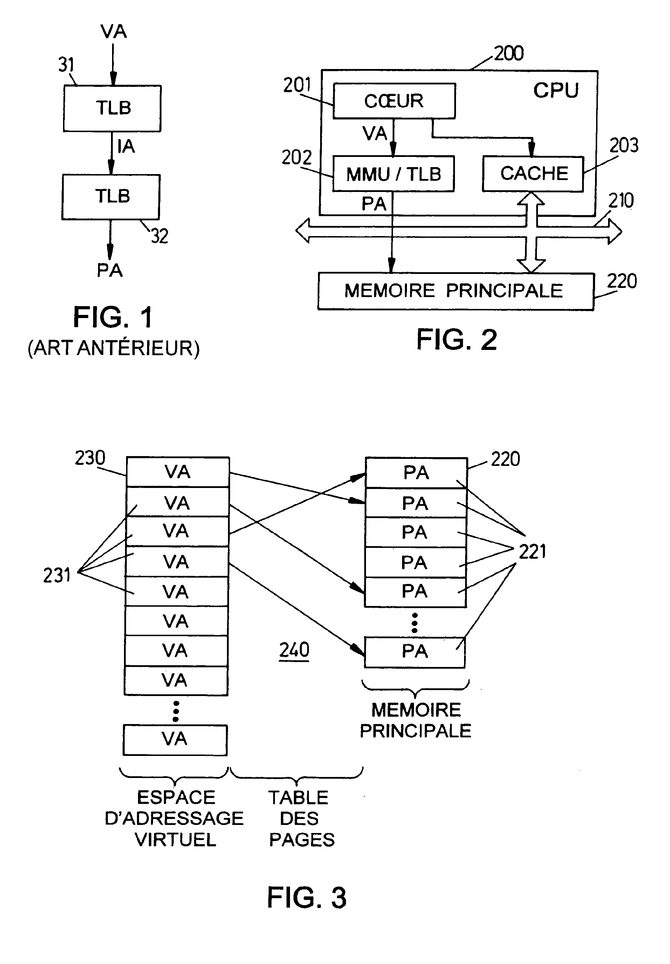

La présente invention a donc pour objet d'améliorer la mise en oeuvre du principe de la double traduction d'adresse. A cet effet, l'invention propose de combiner les deux TLBs de la figure 1 (supérieure et inférieure) en une seule TLB à trois colonnes.

Selon un premier aspect, l'invention propose ainsi un répertoire de pages mémoire (TLB) comprenant un nombre déterminé N d'entrées pour stocker N traductions d'adresse respectives qui associent chacune une portion d'adresse virtuelle déterminée à une portion d'adresse physique déterminée, et qui sont utilisables dans un premier mode de fonctionnement d'un processeur incorporant le répertoire, pour accéder à des données stockées dans une mémoire physique. Chaque entrée du répertoire comprend un premier champ pour stocker la portion d'adresse virtuelle, un deuxième champ pour stocker une portion d'adresse intermédiaire, et un troisième champ pour stocker la portion d'adresse physique, le premier et le troisième champs étant mutuellement associés via le deuxième champ. Le répertoire est adressable dans le premier mode de fonctionnement du processeur par le contenu des premiers champs. Le répertoire est en outre agencé pour, en réponse à une requête d'accès à la mémoire externe, délivrer en sortie la portion d'adresse physique stockée dans le troisième champ d'une entrée déterminée, lorsqu'il est adressé par une valeur d'entrée correspondant à la portion d'adresse virtuelle stockée dans le premier champ de ladite entrée.

Dans un mode de réalisation, pour chaque entrée, le premier champ et le deuxième champ sont accessibles au moins en écriture dans un deuxième mode de fonctionnement du processeur, dans lequel le troisième champ n'est pas accessible.

Dans un mode de réalisation, pour chaque entrée:
- le deuxième champ est accessible en lecture dans un troisième mode de fonctionnement du processeur; et
- le troisième champ est accessible au moins en écriture dans ledit troisième mode de fonctionnement du processeur.

Par exemple, chaque entrée correspond à une ligne de mémoire, et chaque champ de ladite entrée correspond à un bloc de cellules mémoires de ladite ligne de mémoire.

Du point de vue de la consommation, il n'y a aucune pénalité par rapport à un système de traduction d'adresse classique (à un seul niveau de traduction). En effet, la consommation est due essentiellement aux comparaisons réalisées entre le VPN présenté en entrée de la TLB, et les étiquettes des entrées de la TLB. Comme ce nombre de comparaisons n'augmente pas dans le cas de la présente invention, la consommation n'augmente pas non plus, alors qu'un système à deux TLBs en cascade a pour conséquence une consommation double.

Du point de vue de la vitesse, il faut distinguer ce qui se passe lorsque la traduction demandée est trouvée dans la TLB (cas appelé "TLB hit") de ce qui se passe lorsque la traduction demandée n'est pas stockée dans la TLB (cas appelé "TLB miss") et qu'elle doit donc être chargée dans la TLB à partir de la table des pages. Dans le premier cas, les performances sont sensiblement les mêmes qu'avec un système de traduction d'adresse classique. Dans le second cas, la durée est augmentée du temps nécessaire à la mise à jour du champ d'adresse intermédiaire. Néanmoins, le cas du "TLB miss" étant en général des milliers de fois moins fréquent que le cas du "TLB hit", la pénalité de vitesse par rapport à une TLB classique est peu importante. On notera que, dans un système à deux TLBs en cascade, la durée est multipliée par deux dans les deux cas ("TLB hit" et "TLB miss").

L'invention trouve des applications, en particulier, relativement au concept de "virtualisation", inventé par IBM pour permettre l'exécution simultanée de plusieurs OS sur le même processeur. Un OS supporté par le processeur est appelé OS hôte ("Guest OS", en anglais) dans ce contexte. Dans ce type d'applications, par exemple, le premier mode de fonctionnement (le moins privilégié) est un mode utilisateur, le deuxième mode de fonctionnement est un mode superviseur correspondant à un OS hôte ("Guest OS", en anglais), et le troisième mode de fonctionnement est un mode hyperviseur (ou VMM, de l'anglais "Virtual Machine Monitor"), qui est adapté pour gérer une pluralité d'OS hôtes. Chaque OS hôte a accès à sa propre table des pages mais pas aux tables des pages des autres OS hôtes. Le VMM a accès à sa propre table de pages, qui redirige les traductions des OS hôtes.

L'invention peut aussi s'appliquer dans le contexte de la sécurité informatique, pour l'encapsulation sécurisée des systèmes d'exploitation. Dans ce contexte, un processeur peut exécuter des programmes (logiciels) dans plusieurs modes de fonctionnement. Typiquement, il y a un mode utilisateur non sécurisé (pour l'exécution de programmes d'application), un mode superviseur non sécurisé (pour l'exécution de programmes de l'OS), et un mode utilisateur sécurisé ainsi qu'un mode superviseur sécurisé. Le premier et le deuxième modes de fonctionnement selon l'invention peuvent alors être, respectivement, les modes utilisateur non sécurisé et superviseur non sécurisé, qui sont réservés, respectivement, aux applications non sécurisées et à l'OS non sécurisé (par exemple Windows® ou Linux®). Le troisième mode de fonctionnement selon l'invention est par exemple le mode superviseur sécurisé, qui est réservé à l'OS sécurisé. Le mode utilisateur sécurisé est optionnel, mais n'a pas d'influence sur le système proposé.

Dans un mode de réalisation, chaque entrée de la TLB est étiquetée par un identificateur d'espace d'adressage (ASID). Cela permet la mise en oeuvre dans les systèmes à plusieurs OS ayant des espaces d'adressage éventuellement distincts.

Dans les applications dans lesquelles le processeur a une architecture multi contextes, chaque entrée peut être étiquetée par un identificateur de contexte (CID).

De préférence, N est compris entre 4 et 8. On a ainsi un bon compromis entre, d'une part, la rapidité des recherches dans la TLB et la faiblesses de la consommation d'énergie, et, d'autre part, une fréquence pas trop importante des cas de "TLB miss" qui ralentissent aussi le système.

Le processeur peut être doté d'un contrôleur d'accès direct à la mémoire ou contrôleur de DMA ("Direct Memory Access"). Dans ce cas, en réponse à une requête d'accès direct à la mémoire externe:
- le répertoire est adressable par le contenu des deuxièmes champs;
- le répertoire est agencé pour délivrer en sortie la portion d'adresse physique stockée dans le troisième champ d'une entrée déterminée, lorsqu'il est adressé par une valeur d'entrée correspondant à la valeur stockée dans le deuxième champ de ladite entrée.

Le répertoire peut comprendre un jeu de N comparateurs dont chacun est multiplexé de manière à comparer la valeur d'entrée au contenu du premier champ de l'une respective des entrées du répertoire en réponse à une requête d'accès à la mémoire physique, ou à comparer la valeur d'entrée au contenu du deuxième champ de l'une respective des entrées du répertoire en réponse à une requête d'accès direct à la mémoire physique. On a ainsi un seul et même jeu de comparateurs, pour les accès à la mémoire classiques (initiés par le coeur du CPU), et pour les accès DMA.

Un deuxième aspect de l'invention se rapporte à un processeur comprenant un répertoire de pages mémoire selon le premier aspect de l'invention.

Un troisième aspect de l'invention concerne un système comprenant une mémoire physique et un processeur selon le deuxième aspect.

Enfin, un quatrième aspect de l'invention est relatif à un procédé pour faire fonctionner un répertoire de pages mémoire comprenant un nombre déterminé N d'entrées pour stocker N traductions d'adresse respectives qui associent chacune une portion d'adresse virtuelle déterminée à une portion d'adresse physique déterminée, et qui sont utilisables dans un premier mode de fonctionnement d'un processeur incorporant le répertoire, pour accéder à des données stockées dans une mémoire physique, chaque entrée du répertoire comprenant un premier champ pour stocker la portion d'adresse virtuelle, un deuxième champ pour stocker une portion d'adresse intermédiaire, et un troisième champ pour stocker la portion d'adresse physique, le premier et le troisième champs étant mutuellement associés via le deuxième champ. Le procédé comprend les étapes consistant à ;
- en réponse à une requête d'accès à la mémoire externe dans le premier mode de fonctionnement du processeur, adresser le répertoire par le contenu des premiers champs;
- délivrer en sortie du répertoire la portion d'adresse physique stockée dans le troisième champ d'une entrée déterminée, lorsque le répertoire est adressé par une valeur d'entrée correspondant à la valeur de la portion d'adresse virtuelle stockée dans le premier champ de ladite entrée.

Dans un mode de réalisation, lorsque la traduction d'adresse correspondant à la requête d'accès n'est pas disponible dans le répertoire, le premier champ et le deuxième champ d'une entrée sélectionnée du répertoire sont mis à jour dans un deuxième mode de fonctionnement du processeur dans lequel le champ d'adresse physique n'est pas accessible.

Dans un mode de réalisation:
- la valeur stockée dans le deuxième champ de l'entrée du répertoire est lue dans un troisième mode de fonctionnement du processeur, suite à la mise à jour du premier champ et du deuxième champ; et
- le troisième champ de l'entrée du répertoire est mis à jour dans ledit troisième mode de fonctionnement du processeur.

Lorsque le processeur est doté d'un contrôleur de DMA, le procédé peut comprendre en outre les étapes consistant à:
- en réponse à une requête d'accès direct à la mémoire externe, adresser le répertoire par le contenu des deuxièmes champs;
- délivrer en sortie du répertoire la portion d'adresse physique stockée dans le troisième champ d'une entrée déterminée, lorsque le répertoire est adressé par une valeur d'entrée correspondant à la valeur stockée dans le deuxième champ de ladite entrée.

D'autres caractéristiques et avantages de l'invention apparaîtront encore à la lecture de la description qui va suivre. Celle-ci est purement illustrative et doit être lue en regard des dessins annexés sur lesquels :
- la figure 1 est un schéma illustrant le principe de la conversion d'adresse à deux niveaux selon l'art antérieur ;
- la figure 2 est un schéma bloc illustrant un exemple d'architecture d'un système selon l'invention;
- la figure 3 est un schéma illustrant un exemple de relation entre un espace d'adressage virtuel et un espace d'adressage physique, assurée par une table des tables;
- la figure 4 est un schéma fonctionnel illustrant le principe d'une traduction d'adresse effectuée dans un processeur sans TLB, à partir de la table des pages complète;
- la figure 5 est un schéma fonctionnel illustrant le principe d'une traduction d'adresse effectuée dans un processeur avec une TLB selon l'art antérieur;
- la figure 6 est un schéma fonctionnel illustrant un mode de réalisation d'une TLB selon l'art antérieur;
- la figure 7 est un schéma illustrant le fonctionnement et les droits d'accès en lecture et/ou en écriture dans une TLB selon des modes de réalisation de l'invention;
- la figure 8 est un schéma fonctionnel illustrant un mode de réalisation d'une TLB selon l'invention;
- la figure 9 est un diagramme illustrant les différents modes de fonctionnement d'un processeur selon le procédé de l'invention;
- la figure 10 est un schéma illustrant le fonctionnement d'une TLB selon l'invention, dans un processeur équipé d'un contrôleur de DMA; et
- la figure 11 est un schéma fonctionnel illustrant un mode de réalisation d'une TLB selon l'invention, dans un processeur équipé d'un contrôleur de DMA.

Dans la suite et aux figures, des éléments identiques ou similaires portent les mêmes références. On va d'abord présenter le cas d'un système de traduction d'adresse classique, c'est-à-dire à un seul niveau de traduction.

En référence à la figure 2, on prend comme exemple un processeur 200 (CPU) ayant deux modes de fonctionnement distincts : un mode utilisateur et un mode privilégié, le mode privilégié étant réservé à l'OS. Le CPU 200 comprend un coeur ("core" en anglais) 201 et une MMU 202. Il comprend aussi une mémoire cache 203 à travers laquelle il peut accéder à une mémoire physique externe 220, ou mémoire principale du système, via au moins un bus d'accès 210.

En référence à la figure 3, la mémoire principale 220 est en général divisée en pages 221, qui sont des zones contiguës deux à deux, et de mêmes dimensions. On prendra ainsi comme exemple des pages mémoires de 65536 octets (64 Ko). On prendra également comme exemple un système avec un bus d'accès 210 ayant 32 bits. Chaque mot mémoire est donc adressable avec un numéro de page sur 16 bits et un offset sur 16 bits. L'espace d'adressage virtuel 230 est donc de 4 Go, soit 65536 pages mémoires de 65536 octets chacune. En pratique, de nombreuses autres dimensions sont utilisées, et la plupart des MMUs permettent même de gérer simultanément des pages mémoires de dimensions différentes.

La table des pages est une table créée et gérée dynamiquement par l'OS en mémoire, qui donne, pour chaque page 231 de l'espace d'adressage virtuel manipulée par le processeur à l'aide d'une adresse virtuelle VA, l'adresse physique PA de la page de mémoire physique 221 correspondante. Cela permet à chaque programme d'application d'utiliser un espace d'adressage virtuel de 4 Go alors que la mémoire physique réellement existante, par exemple dans une DRAM ("Dynamic Random Access Memory"), est en général bien plus petite, par exemple 256 Mo. Ainsi, une application compilée est relogeable: elle n'a pas besoin d'être modifiée à chaque fois qu'elle est chargée en mémoire. Quand l'OS la charge en mémoire, en provenance d'un disque dur par exemple, il vérifie d'abord combien de mémoire physique reste disponible, et à quelle(s) adresse(s) physique(s), puis il modifie des lignes dans la table des pages pour tenir compte de la nouvelle application. Celle-ci peut même être insérée dans des blocs de mémoire physique disponibles non contigus, le système de traduction d'adresse se chargeant de présenter à l'application un espace contigu de la bonne dimension.

Par exemple, supposons une application qui utilise les adresses 0 à 229000. Cela couvre 4 pages de 64 ko. Quand l'OS essaye de charger cette application, il vérifie dans sa table des pages s'il dispose de 4 pages libres dans la mémoire physique, et si oui, il modifie 4 lignes de la table des pages. Dans les 4 champs de gauche « numéro de page virtuelle VPN » il mettra 0,1,2,3 correspondant aux pages virtuelles contenant les adresses virtuelles 0 à 262143. Dans les 4 champs de droite « numéro de page physique (PPN) » il mettra les numéros des 4 pages physiques disponibles. Que ces dernières soient contiguës ou pas n'a aucune importance.

A la figure 3, un exemple de table des pages 240 est représenté par les flèches reliant des cases de l'espace d'adressage virtuel 230 à des cases de la mémoire principale 220.

L'OS peut dynamiquement modifier la page des tables, c'est-à-dire l'association entre les VPN et les PPN. S'il veut charger une nouvelle application et qu'il manque de mémoire physique, il peut supprimer une autre application qui n'est plus active, ou supprimer une partie de son code qui n'est plus utilisé, ou encore transférer des données d'une autre application dans une mémoire secondaire par un échange (ou "swap") vers le disque dur par exemple, ou vers une mémoire secondaire plus vaste mais plus lente.

La page des tables est donc une liste contenant tous les numéros de pages virtuelles VPN possibles dans les champs de gauche (0 à 65536 dans notre exemple), et, dans les champs de droite correspondants, le numéro de la page physique PPN qui correspond à chacune de ces pages virtuelles, si elle existe. Chaque ligne de la table des pages est de plus étiquetée par un ou plusieurs bits de contrôle d'accès donnant les droits d'accès et autres caractéristiques de la page physique concernée. Il y a ainsi, notamment, un bit de présence qui indique si la page physique existe ou pas: l'espace d'adressage virtuel étant de 4 Go, de nombreuses pages virtuelles n'ont pas de correspondant physique, et la ligne correspondante a donc un bit de présence positionné à 1 qui signifie que la page ne doit pas être accédée.

Dans le cas où le parcours de la table des pages se fait par hardware (HPTW, de l'anglais "Hardware Page Table Walk"), la MMU 202 comprend deux composants hardware: la TLB et le système de parcours de la table des pages (PTW, de l'anglais "Page Table Walk"). Dans le cas où le parcours de la table des pages se fait par logiciel (SPTW, de l'anglais "Software Page Table Walk"), la MMU se réduit à la TLB. Certains processeurs récents utilisent le HPTW, d'autres le SPTW: les deux types existent en pratique. Dans ce qui suit on emploie souvent indifféremment les mots TLB ou MMU, tant qu'on ne s'intéresse pas au mécanisme de parcours de la page des tables.

Ces concepts, et d'autres, vont maintenant être plus largement présentés avant de donner une description de l'invention proprement dite.

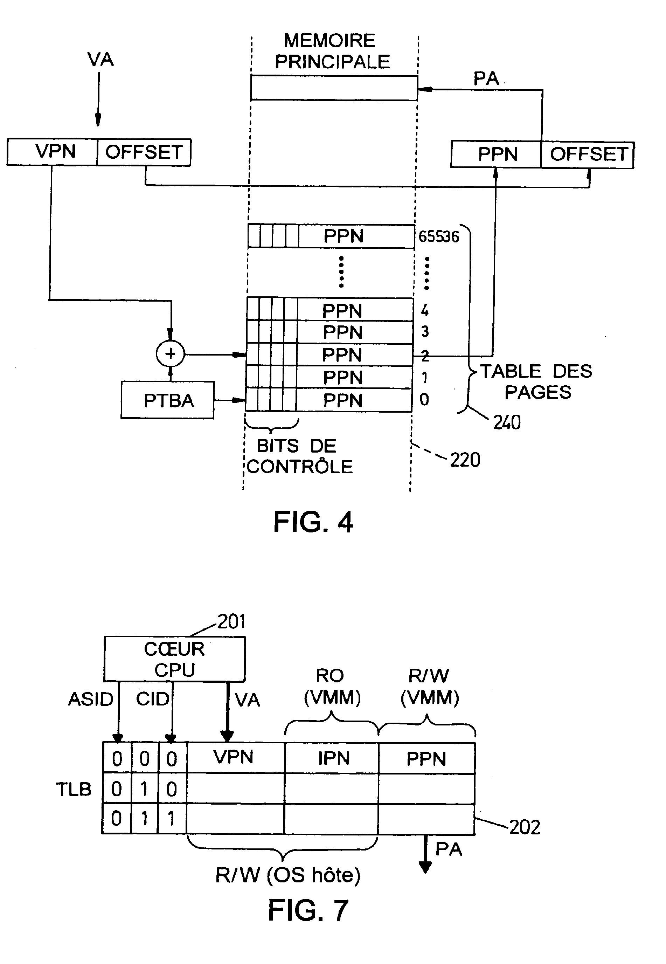

En référence à la figure 4, on va tout d'abord décrire le principe d'une traduction d'adresse sans TLB.

Quand un programme d'application s'exécute, à chaque nouvelle instruction le CPU présente une ou plusieurs nouvelles adresses virtuelles VA au système de traduction d'adresse. Les bits de poids faible (16 bits dans l'exemple) de l'adresse VA définissent un offset qui indique un déplacement ("shift") à l'intérieur de la page mémoire adressée. Ils sont directement transmis à la mémoire principale ou, en variante, à la mémoire cache ou au périphérique adressé, en tant que bits de poids faible de l'adresse physique PA délivrée en sortie de la TLB.

Les bits de poids fort (16 dans l'exemple) de l'adresse VA définissent le numéro de page virtuelle ou VPN. Ils sont envoyés au système de traduction qui cherche dans la table des pages le numéro de page physique PPN correspondant, puis l'envoie à la mémoire centrale, à la mémoire cache ou au périphérique adressé. Le système de traduction, qui se réduit ici à la table des pages 204, contient autant de lignes (65536) qu'il existe de pages virtuelles possibles. Et ce même si, la mémoire physique étant beaucoup plus petite, seule une petite partie des lignes pointe vers une page existant physiquement, les autres ayant le bit de présence indiquant « pas de page physique, accès interdit ».

La recherche dans la table des pages 240 est donc triviale : le numéro de page virtuelle VPN indique le numéro de la ligne mémoire à lire, il suffit de le multiplier par la dimension de la ligne (par exemple 8 octets) et d'y ajouter l'adresse (PTBA, mis pour "Page Table Base Address") de la première ligne de la table des pages 240 dans la mémoire principale 220, pour obtenir le numéro de page physique PPN de la page mémoire recherchée.

La table de pages est placée elle-même dans la mémoire principale 220 en raison de sa grande taille (65536 lignes). Si elle était plus petite, on pourrait la mettre dans une petite mémoire SRAM dédiée, proche du coeur du processeur.

Le traitement d'une adresse virtuelle VA, qui intervient à chaque nouvelle instruction du processeur, nécessite donc deux accès à la mémoire externe: le premier pour lire le numéro de page physique PPN correspondant au numéro de page virtuelle VPN de l'adresse virtuelle; et le second pour aller chercher l'instruction demandée. à l'adresse physique PA reconstituée (numéro de page physique PPN + offset dans la page). L'accès à la mémoire externe étant très lent (typiquement 10 fois le temps d'accès à la mémoire cache), ce système n'est pas acceptable et a donné lieu à l'apparition des MMUs.

La TLB est la partie de la MMU qui est une mémoire cache de la table des pages. C'est une mémoire très rapide qui contient les N lignes les plus récemment utilisées de la table des pages. Typiquement, les TLB actuelles contiennent un très petit nombre N de lignes, avec N de l'ordre de 4 à 64, par exemple, de façon à être très rapides et consommer peu. Une TLB à N lignes, par exemple, contient les N lignes les plus récemment utilisées parmi les 65536 que compte la table des pages. Chacune des N lignes décrit une page de 65536 octets existant en mémoire physique.

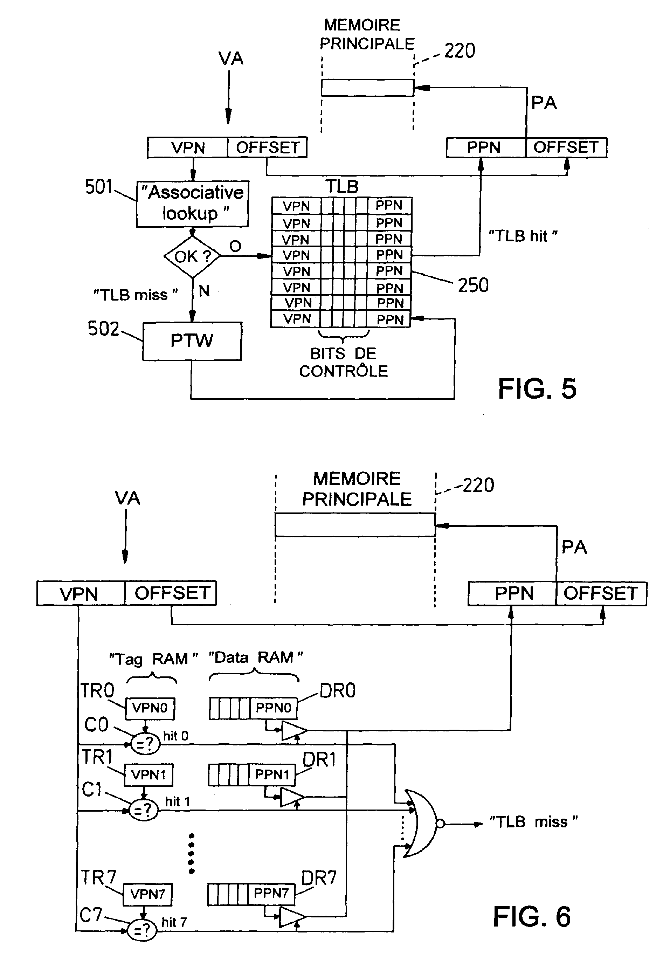

En référence à la figure 5, on va maintenant décrire le principe d'une traduction d'adresse avec une TLB 250, dans un exemple où N=8.

Chaque ligne de la TLB 250 est étiquetée par des bits de contrôle d'accès et contient le numéro de page physique PPN, comme la table des pages. Mais, au contraire de la table des pages, elle contient aussi le numéro de page virtuelle VPN de chacune des 8 traductions référencées. En effet, alors que la recherche de la bonne ligne dans la table des pages se fait simplement par la position de la ligne étant donné que la page des tables contient la totalité des 65536 lignes, seules 8 lignes sont présentes dans le cas de la TLB. Pour trouver la bonne ligne parmi les 8 lignes présentes, le numéro VPN de la page virtuelle demandée par le CPU est comparé simultanément à tous les numéros de page virtuelle des 8 lignes contenues dans la TLB.

La TLB comprend en fait deux types de données. D'une part les données à comparer lors d'une recherche. Il s'agit des 8 numéros de pages virtuelles PPN, plus parfois d'autres données telles que des bits d'identification divers. Ces données étiquettent chaque entrée ("entry") de la TLB. C'est pourquoi on appelle parfois mémoire d'étiquettes ("tag RAM") les registres de mémoire les contenant. Et d'autre part les données qui vont être utilisées quand la recherche aura permis d'indiquer quelle est la bonne parmi les 8 lignes, à savoir les 8 numéros de pages physiques plus les bits de contrôle d'accès associés, notamment un bit indiquant si la ligne est actuellement valide. On appelle parfois mémoire de données ("data RAM") les registres de mémoire contenant ces données.

L'étape 501 de comparaison entre le VPN de la page virtuelle demandée par le CPU d'une part, et les numéros de page virtuelle des 8 lignes contenues dans la TLB d'autre part, est réalisée de manière simultanée afin de gagner du temps. Les termes anglais "Associative Lookup" traduisent le caractère simultané de ces comparaisons.

Si le résultat de la recherche est positif (cas du "TLB hit"), le numéro de page physique PPN stocké dans la ligne de la TLB concernée est transmis à la mémoire externe, en tant que bits de poids fort de l'adresse physique PA reconstituée (accolement de l'offset au PPN), comme dans le cas de la figure 4.

Si au contraire le résultat de la recherche est négatif (cas du "TLB miss"), alors on met à jour la TLB avec la traduction demandée, en effectuant dans une étape 502 le parcours de la table des pages (PTW). A cet effet, on active une unité matérielle de PTW (cas du HPTW) ou on met en oeuvre l'algorithme de PTW (cas du SPTW). La ligne de la TLB qui est écrasée avec la nouvelle traduction peut être sélectionnée par un algorithme de type LRU (de l'anglais "Least Recently Used").

Le schéma de principe de la figure 6 illustre un mode de réalisation possible des moyens de recherche dans la TLB.

Ces moyens comprennent 8 comparateurs, respectivement C0 à C7, recevant chacun la valeur VPN sur une première entrée, et le contenu d'un registre de mémoire respectivement TR0 à TR7 sur une seconde entrée. Les registres TR0 à TR7 forment la mémoire d'étiquettes ("tag RAM") précitée. Ils correspondent à un premier champ, contenant une portion d'adresse virtuelle respectivement VPN0 à VPN7, de la traduction d'adresse correspondante. Ainsi, chaque fois que le CPU présente une nouvelle adresse virtuelle VA en entrée de la TLB, les 16 bits de poids fort de cette adresse (correspondant au VPN recherché dans la TLB) sont comparés simultanément aux étiquettes respectives des 8 traductions d'adresse stockées dans la TLB (correspondant aux VPN appartenant à ces traductions) grâce aux 8 comparateurs C0 à C7. Ce sont ces 8 comparateurs qui créent la majorité de la consommation d'énergie et expliquent que les TLBs aient relativement peu de lignes, car la consommation est proportionnelle au nombre de comparaisons. De plus, bien que les comparaisons soient simultanées, plus le nombre de comparateurs est grand et plus le temps de comparaison est long, en raison de la plus grande capacité parasite à charger/décharger durant la comparaison. Si l'un des registres TR0 à TR7 contient le numéro de page virtuelle VPN recherché, une ligne correspondante hit0 à hit7 passe à 1.

Les lignes hit0 à hit7, quand elles passent à 1, valident les données stockées dans un autre registre de mémoire respectivement DR0 à DR7. Cette validation autorise, dans le cas en outre où l'accès est autorisé, la délivrance du numéro de page physique PPN en sortie de la TLB.

Les registres DR0 à DR7 forment la mémoire de données ("data RAM"). Ils contiennent les numéros de page physique respectivement PPN0 à PPN7 des traductions d'adresse stockées dans la TLB, ainsi que les bits de contrôle d'accès associés.

Les données stockées dans les registres de mémoire TR0-TR7 et DRO-DR7 respectivement de la mémoire d'étiquettes et de la mémoire de données, ont été écrites préalablement par l'OS (cas du SPTW) ou par un mécanisme matériel (cas du HPTW). Il faut noter que, dans le cas du HPTW, ces données ne peuvent être écrites dans leurs registres de mémoire respectifs que quand le processeur est en mode privilégié, c'est-à-dire que seul l'OS a le droit de manipuler les traductions d'adresse dans la TLB.

Si aucun comparateur ne donne de réponse positive, on a un "TLB miss". Une information correspondante est par exemple délivrée en sortie d'une porte logique de type NON OU à 8 entrées, dont les entrées sont couplées aux lignes respectivement hit0 à hit7. Dans le cas du HPTW, cela déclenche le mécanisme matériel de parcours de la table des pages, et met le processeur en attente durant le processus. En effet, il n'y a pas de PPN à lui fournir. Dans le cas du SPTW, la sortie de la porte NON OU déclenche une exception qui fait passer le processeur en mode privilégié et branche sur une fonction d'interruption prédéfinie faisant partie de l'OS.

Cette fonction va parcourir la table des pages dans la mémoire externe en présentant comme index la valeur VPN recherchée, c'est-à-dire l'adresse mémoire PTBA+VPN fois le nombre d'octets dans une ligne mémoire. La table des pages est placée dans une partie de la mémoire réservée à l'OS, c'est-à-dire au mode privilégié. Quand elle aura extrait de la mémoire la valeur PPN correspondante et les bits de contrôle d'accès associé, elle va écrire les informations de la traduction d'adresse dans l'une des 8 lignes de la TLB, à savoir le champ VPN dans l'un des registres TRO-TR7, et le champ PPN ainsi que les bits de contrôle d'accès associés dans le registre DRO-DR7 correspondant. Comme il a déjà été dit, la sélection de celle des 8 lignes de la TLB qui est écrasée peut être basé sur un algorithme de type LRU selon lequel on écrase la ligne qui a été utilisée dans le passé le plus lointain. Cet algorithme est généralement codé en software dans la routine d'interruption. Puis le contrôle revient au mode utilisateur, et maintenant l'adresse VA présentée à la TLB correspond à une traduction d'adresse contenue dans la TLB.

Dans un processeur avec HPTW, le travail effectué par la routine d'interruption est effectué par un module hardware dédié, pendant que le processeur est en attente. A cet effet, le hardware est activé par le signal de "TLB miss", qui met également le processeur en attente.

On va maintenant décrire un mode de réalisation de la TLB de l'invention, dans un exemple d'application à la virtualisation d'un processeur. Dans cette application, le processeur peut supporter une pluralité d'OS. Il a 3 modes de fonctionnement, à savoir le mode utilisateur (le moins privilégié), le mode superviseur (l'un des OS hôtes), et le mode hyperviseur (le plus privilégié). Chaque OS hôte a accès à sa propre table des pages mais pas à celles des autres OS hôtes. Le programme de l'OS qui s'exécute en mode hyperviseur, appelé moniteur de machine virtuelle ou VMM ("Virtual Machine Monitor"), gère les différents OS hôtes. Il a accès à sa propre table de pages, qui redirige les traductions des OS hôtes.

Pour que les différents OS hôtes soient virtualisés, il faut que chacun croit être seul sur le système, et qu'il croit contrôler directement le hardware. C'est seulement ainsi qu'il est possible d'utiliser des OS du commerce non modifiés ("Legacy OS"). C'est le VMM qui installe les OS hôtes et les confine, c'est-à-dire redirige leurs demandes d'accès mémoire de manière qu'elles n'interfèrent pas entre elles. Par exemple, sur un PC, la mémoire tampon ("buffer") d'écran graphique est à une adresse fixe, par exemple A000, et. suivantes. Si l'on a deux OS hôtes, par exemple Windows® et Linux®, tous deux vont, pour adresser l'écran, écrire à l'adresse physique A000. Le rôle du VMM est de multiplexer les deux OS. Il peut par exemple se réserver l'accès à l'écran via l'adresse A000, et rediriger les accès écran de Windows® ou Linux® vers des mémoires tampons secondaires. Dans ce cas, il traduira l'accès à l'adresse Axxx de Windows® en autre chose par exemple un accès à l'adresse Bxxx, et celui de Linux® par exemple en un accès à l'adresse Cxxx. Cela permet que les deux OS hôtes puissent tous deux écrire librement à ce qu'ils croient être l'adresse physique Axxx. Autrement il faudrait les modifier pour pouvoir les installer en tant qu'OS hôte sur la même machine.

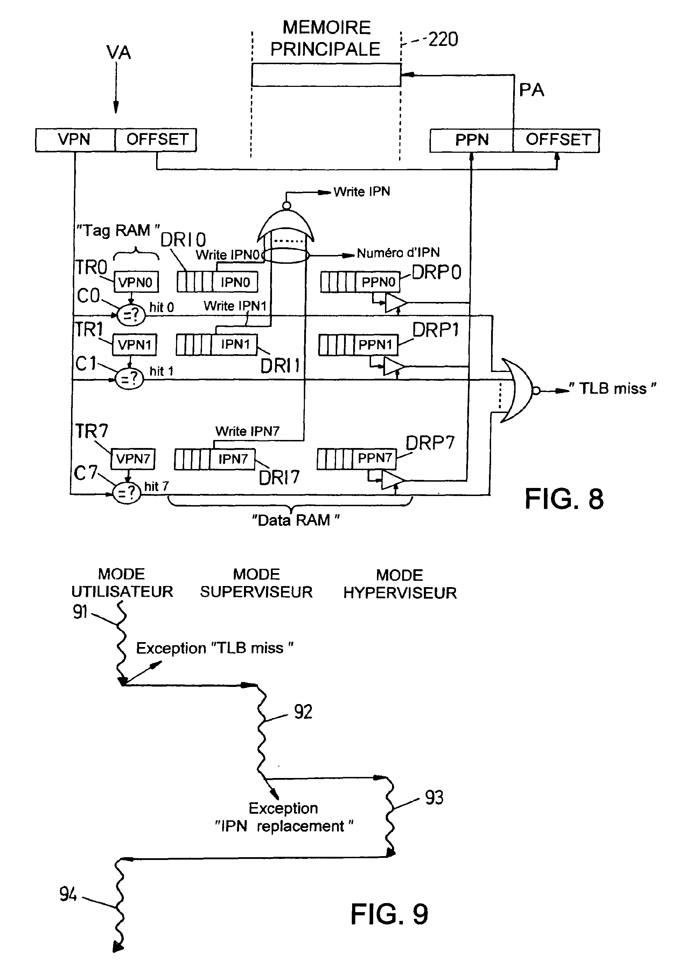

En référence à la figure 7, qui est à comparer au schéma de la figure 1 illustrant l'art antérieur, le principe de la TLB à deux niveaux selon des modes de réalisation l'invention est le suivant.

La TLB comprend un nombre déterminé N de lignes ou entrées ("entry" en anglais), pour stocker N traductions d'adresse respectives. On rappelle qu'une traduction d'adresse associe une portion d'adresse virtuelle déterminée, ici un numéro de page virtuelle (VPN), à une portion d'adresse physique correspondante, ici un numéro de page physique (PPN). Ces traductions sont utilisables par le processeur dans un premier mode de fonctionnement, pour accéder aux données stockées dans une mémoire externe. Dans le contexte de la virtualisation des OS, ce premier mode de fonctionnement est par exemple le mode utilisateur, dans lequel s'exécutent les programmes d'application.

Chaque entrée comprend un champ d'adresse virtuelle stockant le VPN, un champ d'adresse intermédiaire stockant un numéro de page intermédiaire ou IPN ("Intermediate Page Number"), et un champ d'adresse physique stockant le PPN. Le champ d'adresse intermédiaire est associé au champ d'adresse virtuelle, d'une part, et au champ d'adresse physique, d'autre part. En pratique, cette association se traduit par le fait que les registres de mémoire stockant ces champs sont sur une même ligne. C'est pour cette raison que l'on parle de TLB à trois colonnes. Par rapport à la structure à deux TLBs en cascade de l'art antérieur, cette organisation en mémoire est plus efficace, car elle évite la duplication de la portion d'adresse intermédiaire IPN. Mais le principal avantage réside surtout dans les conséquences sur le déroulement d'une traduction d'adresse, en termes de vitesse et de consommation d'énergie, ainsi qu'on le verra plus loin.

La TLB est adressable dans le premier mode de fonctionnement du processeur (mode utilisateur) par le contenu des champs d'adresse virtuelle uniquement. Dit autrement, la mémoire dans laquelle les traductions d'adresse de la TLB sont stockées est une mémoire adressable par le contenu (CAM, "Content Adressable Memory"). La recherche dans la TLB est effectuée à partir de l'adresse virtuelle VA fournie en entrée, par comparaison simultanée ("Associative Lookup") avec les VPN stockés dans la 1^{ère} colonne de la TLB de la portion de cette adresse PA qui leur correspond. La TLB est en outre agencée pour délivrer en sortie une adresse physique PA contenant la portion d'adresse physique PPN stockée dans le champ d'adresse physique d'une entrée déterminée, lorsqu'elle est adressée par une valeur d'entrée correspondant à la valeur de la portion d'adresse virtuelle VPN stockée dans le champ d'adresse virtuelle de cette entrée (cas du "TLB Hit"). C'est ainsi que se traduit, d'un point de vue fonctionnel, l'association mutuelle entre les champs d'adresse virtuelle, d'adresse intermédiaire, et d'adresse physique qui a été mentionnée supra.

Avantageusement, à chaque accès à la TLB dans le mode utilisateur, il n'y a qu'une seule recherche de correspondance entre l'adresse virtuelle VA fournie en entrée de la TLB et les portions d'adresses virtuelles VPN stockées dans la 1^{ère} colonne, alors que la traduction d'adresse est effectivement une traduction à deux niveaux. Or c'est cette étape de recherche de correspondance qui consomme du temps et de l'énergie. L'invention permet donc de ne pas doubler ce temps et cette énergie consommée, par rapport à une TLB classique ayant un seul niveau de traduction.

Dans un mode de réalisation, chaque entrée de la TLB est aussi étiquetée par des champs de données d'identification. Par exemple un tel champ peut stocker un identificateur de contexte ou CID ("Context ID"), ici par exemple sur 1 bit. Un autre champ de ce type peut stocker un identificateur d'espace d'adressage ou ASID ("Address Space IDentifier"), ici par exemple sur 2 bits. On peut prévoir que, pour qu'une traduction soit effectué avec la TLB, la requête correspondante doit avoir en paramètre un CID et un ASID valables, c'est-à-dire correspondant aux valeurs stockées dans les champs de données d'identification de l'entrée de la TLB stockant ladite traduction. Le CID permet de réserver des traductions stockées dans la TLB à un processus déterminé s'exécutant dans le CPU. L'ASID permet de réserver des traductions stockées dans la TLB aux programmes d'application d'un OS déterminé, qui peut avoir un espace d'adressage spécifique.

Pour chaque entrée, le champ d'adresse virtuelle et le champ d'adresse intermédiaire (1^{ère} et 2^{ème} colonnes) sont accessibles en lecture et/ou en écriture (R/W, "Read/Write") dans un deuxième mode de fonctionnement du processeur. Dans le contexte de la virtualisation des OS, ce deuxième mode de fonctionnement est par exemple le mode superviseur, dans lequel s'exécutent les processus de l'OS. Le champ d'adresse physique n'est pas accessible (ni en lecture ni en écriture) dans ce deuxième mode de fonctionnement. Ainsi, un OS hôte, même en mode superviseur, ne peut modifier le confinement mis en place lors de son installation.

Néanmoins, des mesures particulières sont prévues pour permettre la mise à jour de la TLB en cas de "TLB miss".

D'une part, le champ d'adresse intermédiaire (2^{ème} colonne) est accessible en lecture seulement (RO, "Read Only") dans un troisième mode de fonctionnement du processeur. Dans le contexte de la virtualisation des OS, ce troisième mode de fonctionnement est par exemple le mode hyperviseur, dans lequel s'exécute le VMM. De préférence, le champ d'adresse intermédiaire n'est pas accessible en écriture par le VMM afin de ne pas permettre à ce dernier de modifier les données écrites par un OS hôte.

D'autre part, le champ d'adresse physique (3^{ème} colonne) est accessible au moins en écriture, et de préférence en lecture et écriture (R/W), dans le troisième mode de fonctionnement du processeur, c'est-à-dire par le VMM. Ainsi, à partir de la portion d'adresse IPN lue dans le champ d'adresse intermédiaire (2^{ème} colonne), le VMM peut programmer le champ d'adresse physique (3^{ème} colonne). A cet effet, il effectue un parcours de sa propre table des pages.

En référence à la figure 8, un mode de réalisation de la TLB selon l'invention va maintenant être décrit de façon schématique. Dans ce mode de réalisation, à nouveau, N est égal à 8.

Par rapport à l'implémentation de la TLB classique présentée plus haut en référence à la figure 6, la partie correspondant à la mémoire d'étiquettes ("Tag RAM") avec les registres de mémoire TR0-TR7 et les comparateurs C0-C7, est inchangée. Mais la partie correspondant à la mémoire de données ("Data RAM") contient maintenant deux registres de mémoire par ligne de la TLB. Le premier de ces registres, respectivement DRI0 à DRI7, contient le numéro de page intermédiaire, respectivement IPN0 à IPN7. Le second de ces registres, respectivement DRP0 à DRP7, contient le numéro de page physique, respectivement PPN0 à PPN7. Les deux registres d'une ligne contiennent aussi, éventuellement, des bits d'identification tels que les bits de CID et/ou d'ASID.

Quand l'une des lignes hit0 à hit7 passe à 1, elle active la délivrance du numéro respectivement PPN0 à PPN7 en sortie de la TLB, de la même façon qu'une TLB classique (figure 6). Dit autrement, en cas de "TLB hit", c'est la donnée stockée dans le registre DRPx (i.e., le numéro PPNx) qui est utilisée comme numéro de page physique PPN pour l'adressage de la mémoire externe via l'adresse physique PA.

Dans les TLBs classiques, les données de la "Tag RAM" et de la "Data RAM" sont accessibles en lecture et écriture en mode superviseur, et inaccessibles en lecture et écriture en mode utilisateur. Cela permet que seul l'OS puisse les manipuler. Dans des modes de réalisation de l'invention, également, les données de la "Tag RAM" sont accessibles en lecture/écriture au mode superviseur. Plus particulièrement, les données des registres DRlx (à savoir les nombres IPNx) sont accessibles en lecture/écriture au mode superviseur et en lecture seule au mode hyperviseur voire aussi à un éventuel autre mode de fonctionnement ayant une priorité supérieure, tel que par exemple le mode superviseur sécurisé dans les architectures sécurisées. Et les données des registres DRPx (à savoir les nombres PPNx) sont accessibles en lecture/écriture au mode hyperviseur (voire également à l'autre mode de fonctionnement de priorité supérieure).

De plus, l'écriture de l'une quelconque des données IPNx déclenche une exception hardware qui fait passer le processeur en mode hyperviseur et branche sur une fonction d'interruption prédéfinie faisant partie du VMM. Dans un mode de réalisation, tel que représenté, une ligne respectivement Write_IPN0 à Write_IPN7 passe à 1 lorsque le registre respectivement DRI0 à DR17 est accédé en écriture. Une porte logique de type NON OU dont les entrées sont couplées aux lignes Write_IPN0 à Write_IPN7 délivre en sortie un signal Write_IPN. Le hardware indique celui des registres DRI0 à DRI7 qui a été écrit, par exemple en écrivant dans un registre supplémentaire (non représenté) ou en passant en paramètre à la fonction d'interruption, le numéro 0 à 7 correspondant.

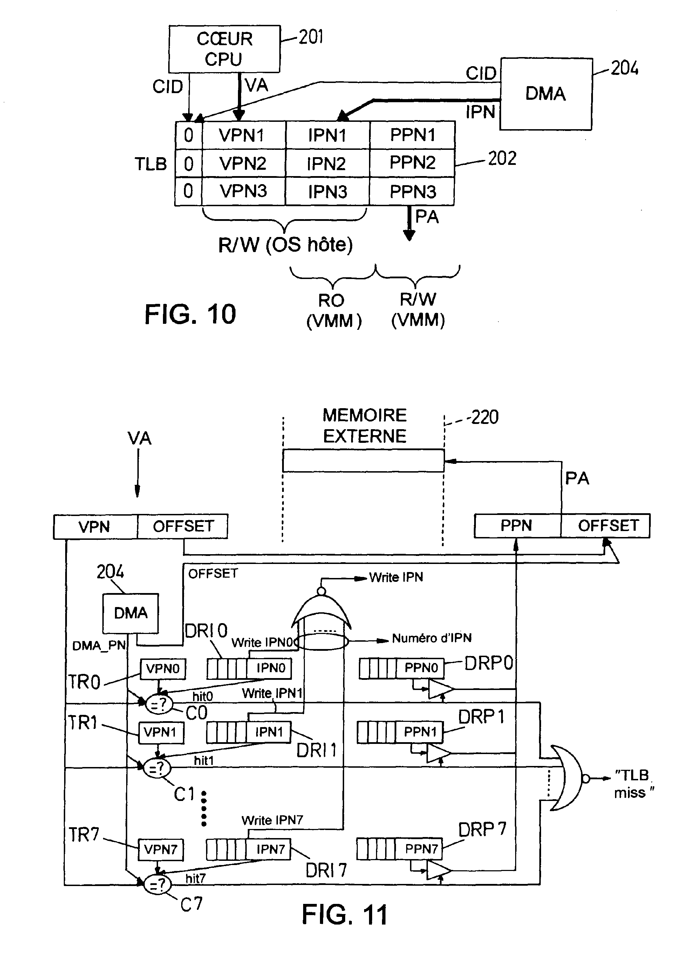

Le fonctionnement de la TLB selon les trois modes de fonctionnement du processeur va être décrit en référence en outre à la figure 9.

Dans le mode utilisateur, un programme d'application réalise dans une étape 91 des accès à la mémoire externe 220. A chaque fois, une adresse virtuelle VA est présentée en entrée de la TLB pour traduction. La portion de cette adresse virtuelle correspondant au VPN est utilisée pour adresser la mémoire d'étiquette ("Tag RAM") de la TLB. Si la TLB contient la traduction d'adresse comprenant ce VPN (i.e., en cas de "TLB hit"), le PPN associé est délivré en tant que portion correspondante de l'adresse physique PA délivrée en sortie de la TLB. Dans le cas contraire, une interruption ou exception "TLB miss" est générée. Cette interruption fait passer le processeur dans le mode superviseur.

Dans une étape 92, l'OS hôte actif (c'est-à-dire celui qui supporte le programme d'application en cours d'exécution) recherche alors dans sa table des pages mémoires la traduction d'adresse manquante. Il sélectionne ensuite la ligne de la TLB qui doit être écrasée, en implémentant par exemple l'algorithme de type LRU précité. Il gère enfin la TLB en écrivant dans l'un des registres de mémoire TRx de la mémoire d'étiquette ("Tag RAM") et dans le registre associé DRIx de la mémoire de donnée ("Data RAM"), respectivement le numéro VPN et le numéro IPN de la traduction à ajouter. Il ignore l'existence du registre DRPx destiné à stocker le numéro PPN, ou en tout cas ne peut pas y accéder, ce registre étant réservé à l'hyperviseur.

La mise à jour d'un registre TRIx active la ligne Write_IPNx correspondante, ce qui active le signal Write_IPN pour générer une seconde exception, notée "IPN replacement". Cette interruption fait passer le processeur dans le mode hyperviseur, et branche sur une fonction prédéfinie.

Dans une étape 93, cette fonction du VMM (s'exécutant en mode hyperviseur) a comme paramètre d'entrée le numéro x de l'lPN qui vient d'être écrit, lui permettant de lire le numéro IPNx dans le registre TRIx qui vient d'être écrasé. Le VMM reçoit à cet effet le numéro d'lPN (indice x) concerné. Sur la base du numéro IPNx ainsi lu, ladite fonction explore alors la table de pages réservée au VMM, pour récupérer la traduction "IPNx => PPNx" correspondante. Ensuite, il écrit le nombre PPNx ainsi récupéré, dans le registre TRPx de la mémoire de données. Quand cette écriture est terminée, le processeur retourne en mode utilisateur.

Dans une étape 94, le programme d'application peut alors obtenir de la TLB la traduction VA => PA désirée, et accéder à la mémoire principale 220 du système.

En résumé, si l'OS hôte, par exemple Windows@ a placé à la ligne 1 de la TLB une traduction pour accéder à la mémoire graphique, il aura écrit l'adresse IPN1=A000 dans le registre DRI1, et il aura écrit, dans le registre TR1, la portion VPN1 de l'adresse virtuelle à laquelle ses applications devront virtuellement accéder pour accéder à la mémoire graphique. Néanmoins, l'hyperviseur aura placé une autre valeur PPN1 dans le registre DRP1, par exemple B000. Ainsi tout accès d'une application Windows® à l'écran sera en fait redirigé vers l'adresse B000, ceci sans aucune modification de Windows® et sans générer de problème de fonctionnement, ni sans que Windows® soit alerté ou passe en mode d'erreur.

Il y a donc en mémoire autant de tables de pages que d'OS hôtes, plus une qui appartient à l'hyperviseur.

On notera que, dans le cas du "TLB hit" qui est le plus fréquent, le temps pour trouver un PPN après la présentation d'un VPN est uniquement lié aux comparaisons entre le VPN avec les données de la mémoire d'étiquettes "Tag RAM". La quantité de données stockée dans la mémoire de donnée "Data RAM" n'a pas d'influence. La vitesse de fonctionnement est donc sensiblement la même que celle d'une TLB classique. C'est un gros avantage par rapport à d'autres propositions (demande de brevet US 2004/0143720 discutée en introduction) où il y a deux TLB classiques en cascade : une qui traduit le VPN en un IPN, suivie d'une seconde qui traduit ledit IPN en un PPN. Dans ce dernier cas, le temps est doublé, ce qui est inacceptable car la recherche dans la TLB intervient à chaque instruction élémentaire (instruction de l'"opcode"), c'est-à-dire parfois plusieurs fois par instruction du programme d'application.

Dans le cas plus rare d'un "TLB miss", le processeur passe du mode utilisateur au mode superviseur et saute à la fonction d'interruption de l'OS hôte dédiée aux "TLB miss" qui prend un certain temps. Dès que le nombre IPNx a été écrit, le processeur saute à la fonction hyperviseur qui lit le nombre IPNx, parcourt la table hyperviseur et remplace le nombre PPNx avec le résultat. Comparé au cas d'une TLB classique où seule l'interruption "TLB miss" est traitée, la durée est augmentée du temps nécessaire au traitement de l'interruption "IPN replacement". Le cas du "TLB miss" étant en général des milliers de fois moins fréquent que le cas du "TLB hit" la pénalité de vitesse par rapport à une TLB classique est néanmoins peu importante.

En référence à la figure 10, l'OS hôte peut programmer ses éventuels transferts DMA ("Direct Memory Access") à l'aide de ce qu'il tient pour des adresses physiques, c'est-à-dire à l'aide d'adresses intermédiaires. On peut concevoir un contrôleur de DMA 204 générant des adresses intermédiaires, qui procure ainsi une DMA virtualisée fonctionnant parfaitement bien avec le système d'OS hôte et d'hyperviseur proposé.

A la figure 10, pour simplifier, on a considéré un exemple où les entrées de la TLB 202 ne sont étiquetées que par un identificateur de contexte CID, mais pas par un identificateur d'espace d'adressage ASID. Une requête DMA fournit donc en paramètre un numéro de page intermédiaire IPN et un identificateur de contexte CID associé. Cet IPN et ce CID sont comparés aux données correspondantes stockées dans les lignes de la TLB, comme dans le premier mode de fonctionnement pour le VPN et le CID.

Dans un mode de réalisation, on peut à cet effet ajouter dans la TLB un jeu de comparateurs additionnels qui comparent les données IPNx stockées dans les registres TRx avec la valeur d'adresse présentée par le contrôleur de DMA. Ceci revient à traiter les données IPNx comme des étiquettes. La représentation graphique de ces comparateurs serait une extension du schéma de la figure 8, qu'il ne semble pas nécessaire de fournir ici. De préférence, ces comparateurs additionnels ne sont utilisés que lors du fonctionnement de la DMA, afin de ne pas pénaliser la consommation de la TLB. De même, on peut prévoir que quand le contrôleur de DMA fonctionne, la TLB ne peut plus traduire les portions d'adresses VPN venant du CPU. De ce fait, le CPU peut être mis en attente pendant le transfert DMA.

Mais, dans un mode de réalisation illustré à la figure 11, le circuit peut utiliser les comparateurs déjà existants, en les multiplexant, au lieu de comparateurs supplémentaires. Dans ce mode de réalisation, en réponse à une requête DMA, les entrées des comparateurs recevant habituellement le numéro de page virtuelle VPN présenté par le CPU reçoivent ici le numéro de page IPN présenté par le contrôleur DMA. De plus, les entrées des comparateurs recevant habituellement les numéros de page virtuelle VPNx stockés dans les registres TRx reçoivent ici les numéros d'adresse intermédiaire IPNx stockés dans les registres DRlx.

Dans les deux modes de réalisation, la consommation n'est pas affectée par la fonctionnalité de DMA ainsi offerte, car un seul jeu de comparateurs est utilisé à la fois. Ceux prévus pour traiter une traduction dans le cadre d'une requête DMA, s'ils sont différents de ceux prévus pour traiter les traductions d'une requête CPU normale, peuvent en effet être désactivés quand il n'y a pas de transfert DMA en cours.

Des mesures supplémentaires peuvent être prévues en cas d'un "TLB miss" sur une requête d'accès DMA. Certes, normalement, un transfert DMA a été préparé au préalable par l'application ou l'OS hôte, en sorte qu'on peut penser qu'il n'y aura pas de "TLB miss" car les bonnes traductions ont en principe été installées dans la TLB au préalable. Toutefois, dans des systèmes où on ne pourrait pas te garantir, il pourrait y avoir le cas où il n'y a pas dans la TLB d'IPNx correspondant au numéro de page IPN présenté par le contrôleur de DMA.

Dans ce cas, l'exception déclenchée par le "TLB miss" peut activer le mode hyperviseur pour remplacer un couple IPNx-PPNx. Le mode hyperviseur doit donc sélectionner une ligne à écraser parmi les 8 lignes de la TLB. Seuls les portions d'adresse IPNx et PPNx seront remplacées, et pas le nombre VPNx correspondant. Dans ce cas, on peut prévoir que la fonction hyperviseur mette à 0 le bit de validité de la ligne, pour signifier au CPU, quand il se remettra en route, que cette ligne ne contient pas d'informations valides. Le contrôleur de DMA, quant à lui, peut être agencé pour fonctionner quand même avec une traduction dont le bit de validité est à 0.

## Revendications

1. Répertoire de pages mémoire (202) comprenant un nombre déterminé N d'entrées pour stocker N traductions d'adresse respectives qui associent chacune une portion d'adresse virtuelle (VPN) déterminée à une portion d'adresse physique (PPN) déterminée, et qui sont utilisables dans un premier mode de fonctionnement d'un processeur (200) incorporant le répertoire pour accéder à des données stockées dans une mémoire physique (220), **caractérisé en ce que**:
- chaque entrée du répertoire comprend un premier champ (TRx) pour stocker la portion d'adresse virtuelle, un deuxième champ (DRlx) pour stocker une portion d'adresse intermédiaire, et un troisième champ (DRPx) pour stocker la portion d'adresse physique, le premier et le troisième champs étant mutuellement associés via le deuxième champ ;
- le répertoire est adressable dans le premier mode de fonctionnement du processeur par le contenu des premiers champs;
- le répertoire est agencé pour, en réponse à une requête d'accès à la mémoire externe, délivrer en sortie la portion d'adresse physique (PPN) stockée dans le troisième champ d'une entrée déterminée, lorsqu'il est adressé par une valeur d'entrée (VPN) correspondant à la portion d'adresse virtuelle (VPN0-VPN7) stockée dans le premier champ de ladite entrée.

2. Répertoire selon la revendication 1, dans lequel, pour chaque entrée, le premier champ et le deuxième champ sont accessibles au moins en écriture dans un deuxième mode de fonctionnement du processeur, dans lequel le troisième champ n'est pas accessible.

3. Répertoire selon la revendication 1 ou la revendication 2, dans lequel pour chaque entrée:
- le deuxième champ est accessible en lecture dans un troisième mode de fonctionnement du processeur; et
- le troisième champ est accessible au moins en écriture dans ledit troisième mode de fonctionnement du processeur.

4. Répertoire selon l'une quelconque des revendications précédentes, dans lequel chaque entrée correspond à une ligne de mémoire, et dans lequel chaque champ de ladite entrée correspond à un bloc de cellules mémoires de ladite ligne de mémoire.

5. Répertoire selon l'une quelconque des revendications 1 à 4, dans lequel le premier mode de fonctionnement est un mode utilisateur dans lequel au moins un programme application est exécutée par le processeur, le deuxième mode de fonctionnement est un mode privilégié dans lequel au moins un processus d'un système d'exploitation hôte est exécuté par le processeur, et le troisième mode de fonctionnement est un mode de surveillance de machine virtuelle.

6. Répertoire selon l'une quelconque des revendications 1 à 4, dans lequel le premier mode de fonctionnement est un mode utilisateur, le deuxième mode de fonctionnement est un mode superviseur non sécurisé, et le troisième mode de fonctionnement est un mode superviseur sécurisé.

7. Répertoire selon l'une quelconque des revendications précédentes, dans lequel chaque entrée est étiquetée par un identificateur d'espace d'adressage (ASID).

8. Répertoire selon l'une quelconque des revendications précédentes, dans lequel, le processeur ayant une architecture multi contextes, chaque entrée est étiquetée par un identificateur de contexte (CID).

9. Répertoire selon l'une quelconque des revendications précédentes, dans lequel N est compris entre 4 et 8.

10. Répertoire selon l'une quelconque des revendications précédentes, dans lequel, en réponse à une requête d'accès direct à la mémoire externe:
- le répertoire est adressable par le contenu des deuxièmes champs;
- le répertoire est agencé pour délivrer en sortie la portion d'adresse physique stockée dans le troisième champ d'une entrée déterminée, lorsqu'il est adressé par une valeur d'entrée correspondant à la valeur stockée dans le deuxième champ de ladite entrée.

11. Répertoire selon la revendication 10, comprenant un jeu de N comparateurs dont chacun est multiplexé de manière à comparer la valeur d'entrée au contenu du premier champ de l'une respective des entrées du répertoire en réponse à une requête d'accès à la mémoire physique, ou à comparer la valeur d'entrée au contenu du deuxième champ de l'une respective des entrées du répertoire en réponse à une requête d'accès direct à la mémoire physique.

12. Processeur comprenant un répertoire selon l'une quelconque des revendications précédentes.

13. Système comprenant une mémoire physique (220) et un processeur (200) selon la revendication 12.

14. Procédé pour faire fonctionner un répertoire de pages mémoire (202) comprenant un nombre déterminé N d'entrées pour stocker N traductions d'adresse respectives qui associent chacune une portion d'adresse virtuelle (VPN) déterminée à une portion d'adresse physique (PPN) déterminée, et qui sont utilisables dans un premier mode de fonctionnement d'un processeur (200) incorporant le répertoire pour accéder à des données stockées dans une mémoire physique (220) chaque entrée du répertoire comprenant un premier champ (TRx) pour stocker la portion d'adresse virtuelle, un deuxième champ (DRlx) pour stocker une portion d'adresse intermédiaire, et un troisième champ (DRPx) pour stocker la portion d'adresse physique, le premier et le troisième champs étant mutuellement associés via le deuxième champ, le procédé comprenant les étapes consistant à ;
- en réponse à une requête d'accès à la mémoire externe dans le premier mode de fonctionnement du processeur, adresser le répertoire par le contenu des premiers champs;
- délivrer en sortie du répertoire la portion d'adresse physique (PPN) stockée dans le troisième champ d'une entrée déterminée, lorsque le répertoire est adressé par une valeur d'entrée (VPN) correspondant à la portion d'adresse virtuelle (VPN0-VPN7) stockée dans le premier champ de ladite entrée.

15. Procédé selon la revendication 14, dans lequel, lorsque la traduction d'adresse correspondant à la requête d'accès n'est pas disponible dans le répertoire, le premier champ et le deuxième champ d'une entrée sélectionnée du répertoire sont mis à jour dans un deuxième mode de fonctionnement du processeur dans lequel le troisième champ n'est pas accessible.

16. Procédé selon la revendication 15, dans lequel:
- la valeur stockée dans le deuxième champ de l'entrée du répertoire est lue dans un troisième mode de fonctionnement du processeur, suite à la mise à jour du premier champ et du deuxième champ; et
- le troisième champ de l'entrée du répertoire est mis à jour dans ledit troisième mode de fonctionnement du processeur.

17. Procédé selon l'une quelconque des revendications 14 à 16, comprenant en outre les étapes consistant à:
- en réponse à une requête d'accès direct à la mémoire externe, adresser le répertoire par le contenu des deuxièmes champs;
- délivrer en sortie du répertoire la portion d'adresse physique stockée dans le troisième champ d'une entrée déterminée, lorsque le répertoire est adressé par une valeur d'entrée correspondant à la valeur stockée dans le deuxième champ de ladite entrée.
